# EUROPEAN PATENT APPLICATION

(11) **EP 2 508 493 A1**
(43) Date of publication of application: **10.10.2012**
(21) Application number: 10834675.0
(22) Date of filing: 03.12.2010
(51) Int. Cl.: C03C 23/00

(54) **GLASS PLATE AND PROCESS FOR PRODUCTION THEREOF**

(30) Priority: 04.12.2009 JP 2009276315
(71) Applicant: Asahi Glass Company, Limited, Tokyo 100-8405 (JP)
(72) Inventor: ARAI, Yusuke, Tokyo 100-8405 (JP); KOBAYASHI, Tomoyuki, Tokyo 100-8405 (JP); KONDO, Yuki, Tokyo 100-8405 (JP)
(74) Representative: Müller-Boré & Partner Patentanwälte
(86) International application number: PCT/JP2010/071744
(87) International publication number: WO 2011/068225

(57) **Abstract**

To provide an inexpensive glass plate on the surface of which elution of Na⁺ is suppressed, and its production process.

A glass plate comprising soda lime silica glass containing at least elements of Si, Al, Ca and Na, wherein when the Na amount at a depth of 2,000 nm from at least one surface of the glass plate is 100%, the Na amount at a depth of 20 nm from the above surface is at most 45%, the Na amount at a depth of 40 nm from the above surface is at most 70%, and the Na amount at a depth of 60 nm from the above surface is at most 80%.

## Description

### TECHNICAL FIELD

The present invention relates to a glass plate on the surface of which elution of Na⁺ is suppressed, and its production process.

### BACKGROUND ART

For a building glass plate, a glass plate for a vehicle (e.g. window glass for an automobile), a glass plate for a solar cell (a cover glass, a glass substrate for a thin-film solar cell), a glass substrate for a solar power generation light-collecting mirror, etc., soda lime silica glass containing elements of Si, Al, Na, Ca and the like has been used, which can be used for general purposes and is easily produced.

However, Na⁺ is likely to be eluted on the surface of a glass plate comprising soda lime silica glass containing Na, and thus the following problems arise.
(1) An antireflection film formed on the surface of the glass plate reacts with Na⁺ eluted on the surface of the glass plate with time, whereby the antireflection film is separated from the glass plate.
(2) A transparent conductive film formed on the surface of e.g. a glass substrate for a thin-film solar cell reacts with Na⁺ eluted on the surface of the glass plate with time, and the transparent conductive film is deteriorated.
(3) When the glass plate is used outdoors for a long period of time, e.g. white turbidity called stain may occur by Na⁺ eluted on the surface of the glass plate with time.

Here, elution of Na⁺ on the surface of the glass plate with time means elution of Na⁺ simply with time and in addition includes elution of Na⁺ in a heating process required for processing of the glass plate.

Accordingly, a glass plate on the surface of which elution of Na⁺ is suppressed, is required for an application such that a functional film such as an antireflection film or a transparent conductive film is formed on the surface, particularly for a glass plate for a solar cell.

Here, as glass free from elution of Na⁺ on the surface, alkali-free glass containing no Na has been known. However, alkali-free glass is unsuitable for a building glass plate, a glass plate for an automobile, a glass plate for a solar cell, etc., with a wide variety, since materials used are hardly melted and the production process tends to be complicated. Further, it has been known to interpose an alkali barrier film between the glass plate and the functional film, a solar cell layer or the like, so as to suppress elution of Na⁺ on the functional film (Patent Document 1). However, by such a means of suppressing elution of Na⁺, a step of forming the alkali barrier film on the surface of the glass plate is added.

### PRIOR ART DOCUMENT

### PATENT DOCUMENT

Patent Document 1: JP-A-58-26052

### DISCLOSURE OF INVENTION

### TECHNICAL PROBLEM

The present invention is to provide a glass plate on the surface of which elution of Na⁺ is suppressed, and its production process.

### SOLUTION TO PROBLEM

The glass plate of the present invention is a glass plate comprising soda lime silica glass containing at least elements of Si, Al, Ca and Na, wherein when the Na amount at a depth of 2,000 nm from at least one surface of the glass plate is 100%, the Na amount at a depth of 20 nm from the above surface is at most 45%, the Na amount at a depth of 40 nm from the above surface is at most 70%, and the Na amount at a depth of 60 nm from the above surface is at most 80%.

Further, the glass plate of the present invention preferably comprises, as represented by mass percentage based on oxides:
- SiO₂ :: 60 to 80%,
- Al₂O₃ :: 2 to 10%,
- MgO :: 0 to 10%,
- CaO :: 1 to 18%,
- Na₂O :: 5 to 20%, and
- K₂O : :: 0 to 5%,
more preferably comprises:
- SiO₂ :: 66 to 72%,
- Al₂O₃ :: 5 to 10%,
- MgO :: 4 to 8%,
- CaO :: 6 to 15%,
- Na₂O :: 7 to 17%, and
- K₂O :: 0 to 1%.

The process for producing a glass plate of the present invention is a process for producing a glass plate comprising soda lime silica glass containing at least elements of Si, Al, Ca and Na, which comprises forming molten glass into a glass plate, and when the glass plate is cooled, bringing a SO₂ gas or a SO₃ gas into contact with at least one surface of the glass plate having a surface temperature of from the glass transition temperature of the glass plate +50°C to the glass transition temperature of the glass plate -150°C, to obtain a glass plate wherein when the Na amount at a depth of 2,000 nm from the above surface after cooling is 100%, the Na amount at a depth of 20 nm from the above surface is at most 45%, the Na amount at a depth of 40 nm from the above surface is at most 70%, and the Na amount at a depth of 60 nm from the above surface is at most 80%.

### ADVANTAGEOUS EFFECTS OF INVENTION

With respect to the glass plate of the present invention, elution of Na⁺ on the surface can be suppressed even with time.

Further, according to the process for producing a glass plate of the present invention, a glass plate on the surface of which elution of Na⁺ is suppressed, can be produced.

### DESCRIPTION OF EMBODIMENTS

The glass plate of the present invention is characterized in that elution Na⁺ on the surface is suppressed by changing the distribution of the Na amount in the depth direction in the vicinity of at least one surface of the glass plate comprising soda lime silica glass containing at least elements of Si, Al, Ca and Na.

The distribution of the Na amount in the glass plate of the present invention satisfies the following condition (I).

### Condition (I):

When the Na amount at a depth of 2,000 nm from the surface of the glass plate is 100%, the Na amount at a depth of 20 nm from the surface of the glass plate is at most 45%, the Na amount at a depth of 40 nm from the surface of the glass plate is at most 70%, and the Na amount at a depth of 60 nm from the surface of the glass plate is at most 80%.

With respect to the glass plate of the present invention, elution of Na⁺ on the surface with time can be sufficiently suppressed by the distribution of the Na amount in the vicinity of at least one surface satisfying the condition (I).

The distribution of the Na amount in the glass plate of the present invention preferably satisfies the following condition (II).

### Condition (II):

When the Na amount at a depth of 2,000 nm from the surface of the glass plate is 100%, the Na amount at a depth of 20 nm from the surface of the glass plate is at most 40%, the Na amount at a depth of 40 nm from the surface of the glass plate is at most 60%, and the Na amount at a depth of 60 nm from the surface of the glass plate is at most 70%.

The Na amount at a specific depth from the surface of the glass plate is measured by the following method.

### Method of measuring the Na amount:

The amount of Na can be measured by measuring the concentration profile of each element in glass by X-ray photoelectron spectroscopy. On that occasion, by carrying out the X-ray photoelectron spectroscopic measurement while carrying out etching treatment from the surface to the inside of the glass plate by means of ⁶⁰Co ion sputtering, the Na mount at a specific depth from the glass plate surface can be measured. The depth at which measurement is conducted is at a level of about 100 nm from the glass plate surface layer.

The glass plate of the present invention preferably comprises soda lime silica glass having the following composition as represented by mass percentage based on oxides:
- SiO₂ :: 60 to 80%,
- Al₂O₃ :: 2 to 10%,
- MgO :: 0 to 10%,
- CaO :: 1 to 18%,
- Na₂O :: 5 to 20%, and
- K₂O :: 0 to 5%.

By the SiO₂ content being at least 60%, good weather resistance will be obtained, such being preferred. By the SiO₂ content being at most 80%, good melting properties will be obtained, and devitrification is less likely to occur, such being preferred. The SiO₂ content is preferably from 60 to 80%, more preferably from 63 to 76%, further preferably from 65 to 75%, most preferably from 66 to 72%, as represented by mass percentage based on oxides.

Al₂O₃ is a component to improve the weather resistance and is a component to make the after-mentioned dealkalization by contact with a SO₂ gas or a SO₃ gas be efficiently conducted.

By the Al₂O₃ content being at least 2%, good weather resistance will be obtained, and the efficiency of the after-mentioned dealkalization by contact with a SO₂ gas or a SO₃ gas will be good. By the Al₂O₃ content at most 10%, good melting properties will be obtained, and the material cost will not be high, such being preferred. The Al₂O₃ content is preferably from 2 to 10%, more preferably from 2.5 to 10%, further preferably from 4 to 10%, most preferably from 5 to 10%, as represented by mass percentage based on oxides.

MgO is a component to accelerate melting of the glass material and to improve the weather resistance, and is a component to make the after-mentioned dealkalization by contact with a SO₂ gas or a SO₃ gas be efficiently conducted.

By the MgO content being at least 0.1 %, good melting properties and weather resistance will be obtained, and the efficiency of the after-mentioned dealkalization by contact with a SO₂ gas or a SO₃ gas will be good. By the MgO content being at most 10%, the glass will hardly be devitrified, such being preferred. The MgO content is preferably from 0 to 10%, more preferably from 0.1 to 10%, further preferably from 0.5 to 10%, most preferably from 4 to 8% as represented by mass percentage based on oxides.

CaO is a component to accelerate melting of the glass material and to improve the weather resistance.

By the CaO content being at least 1%, good melting properties and weather resistance will be obtained. By the CaO content being at most 18%, the glass is hardly devitrified, such being preferred. The CaO content is preferably from 1 to 18%, more preferably from 3 to 18%, further preferably from 5 to 15%, most preferably from 6 to 15%, as represented by mass percentage based on oxides.

Na₂O is a component to accelerate melting of the glass material.

By the Na₂O content being at least 5%, good melting properties will be obtained. By the Na₂O content being at most 20%, the weather resistance of the glass will be good, such being preferred. The Na₂O content is preferably from 5 to 20%, more preferably from 6 to 19%, further preferably from 7 to 18%, most preferably from 7 to 17%, as represented by mass percentage based on oxides.

K₂O is a component to accelerate melting of the glass material and to improve the weather resistance of the glass when used together with Na₂O. By the K₂O content being at most 5%, the material cost will not be high, such being preferred. The K₂O content is preferably from 0 to 5%, more preferably from 0 to 2.5%, further preferably from 0 to 1.5%, most preferably from 0 to 1%, as represented by mass percentage based on oxides.

The glass plate of the present invention may contain a coloring component depending on the purpose of use. The coloring component may be an element of e.g. Fe, Ti, Co, Cr, V, Mn or Ce. However, for the application to a glass plate for a solar cell which utilizes light in the near infrared region, it is preferred that the glass plate contains Fe (particularly bivalent Fe) which absorbs light in the near infrared region as little as possible (specifically, the total content of Fe as calculated as Fe₂O₃ is at most 0.1% as represented by mass percentage based on oxides).

The glass plate of the present invention may contain SnO₂ used as a refining agent. The SnO₂ content is preferably at most 0.5% as represented by mass percentage based on oxides. When the SnO₂ content is at most 0.5%, volatilization of SnO₂ is small, and the cost can be suppressed low. The SnO₂ content is more preferably from 0 to 0.3%, further preferably from 0 to 0.1 %, as represented by mass percentage based on oxides.

The glass plate of the present invention may contain SO₃ used as a refining agent. The SO₃ content is preferably at most 1% as represented by mass percentage based on oxides. When the SO₃ content is at most 1%, the gas component of SO₃ will not remain in the glass as bubbles. The SO₃ content is more preferably from 0.02 to 0.5%, further preferably from 0.05 to 0.2%, as represented by mass percentage based on oxides.

The glass plate of the present invention may be used as any of a building glass plate, a glass plate for a vehicle, and a glass plate for a solar cell, and is particularly suitable as a glass plate for a solar cell, a glass substrate for a solar power generation light-collecting mirror, etc.

When it is used as window glass for an automobile, as the case requires, it may be used as a laminated glass comprising a plurality of glass plates and an interlayer sandwiched therebetween, curved glass having flat glass processed to have a curved shape, or tempered glass having tempering treatment applied.

Further, when the glass plate is used as a glass plate for a solar cell, it may be used as a cover glass or may be used as a glass substrate for a thin-film solar cell.

The glass plate of the present invention is produced, for example, by the following steps (i) to (vi) in order.
(i) Various materials for the glass matrix composition, a refining agent and the like are mixed to achieve an aimed composition to prepare a glass material.
(ii) The glass material is melted to obtain molten glass.
(iii) The molten glass is refined, and then formed into a glass plate having a predetermined thickness e.g. by the float process.
(iv) The glass plate is cooled. On that occasion, a SO₂ gas or a SO₃ gas is brought into contact with at least one surface (both surfaces as the case requires) of the glass plate.
(v) The glass plate is cut into a predetermined size to obtain the glass plate of the present invention.
(vi) As the case requires, the cut glass plate may be subjected to tempering treatment, may be formed into laminated glass, or may be formed into double glazing.

### Step (i):

As the materials for glass matrix composition, ones used as materials for conventional soda lime silica glass, such as silica sand and feldspar may be mentioned.

As the refining agent, SnO₂ or SO₃ may, for example, be mentioned.

It is preferred to prepare the glass material taking the influence of the after-mentioned dealkalization in the step (iii) into consideration so as to obtain soda lime silica glass having the above-described preferred composition. Here, dealkalization occurs in the step (iii) only on a very restricted region in the vicinity of the surface of the glass plate, and the dealkalization hardly influences the composition of a glass plate to be finally obtained.

### Step (ii):

Melting of the glass material is carried out, for example, by continuously supplying the glass material to a melting furnace and heating it to about 1,500°C e.g. by heavy oil.

### Step (iv):

When a SO₂ gas or a SO₃ gas is brought into contact with the surface of the glass plate at high temperature, Na⁺ which is present in the vicinity of the surface of the glass plate reacts with the SO₂ gas or the SO₃ gas to form Na₂SO₄. Na₂SO₄ is deposited on the surface of the glass plate and drops off from the surface of the glass plate, whereby the portion in the vicinity of the surface of the glass plate is dealkalized, and accordingly the distribution of the Na amount in the vicinity of the surface of the glass plate satisfies the above-described condition (I) (preferably the condition (II)).

On that occasion, when the Al₂O₃ content in the glass plate is at least 2% (preferably at least 5%, more preferably at least 5%) as represented by mass percentage based on oxides, Na⁺ is likely to move to the surface of the glass plate, whereby the dealkalization by the contact with the SO₂ gas or the SO₃ gas will be carried out efficiently. Further, when the MgO content in the glass plate is at least 3% (preferably at least 4%) as represented by mass percentage based on oxides, Na⁺ is more likely to move to the surface of the glass plate, whereby the dealkalization by the contact with the SO₂ gas or the SO₃ gas will be carried out more efficiently.

In production of the glass plate of the present invention, the surface temperature of the glass plate when the SO₂ gas or the SO₃ gas is brought into contact with the surface of the glass plate is preferably from the glass transition temperature of the glass plate +50°C to the glass transition temperature of the glass plate -150°C. When the surface temperature of the glass plate is at least the glass transition temperature of the glass plate, the reaction of Na⁺ with the SO₂ gas or the SO₃ gas will sufficiently proceed. When the surface temperature of the glass plate when brought into contact with the gas is at most the glass transition temperature of the glass plate +50°C, the alkali movement in the glass will not be too large, the dealkalized layer formed by contact with the SO₂ gas or the SO₃ gas is less likely to be relaxed, and the glass is less likely to be deformed, such being preferred.

The surface temperature of the glass plate is measured by a method of bringing a thermocouple thermometer into contact directly with the glass plate, using a radiation thermometer, or the like. The glass transition temperature of the glass plate is measured in accordance with a method as stipulated by Japanese Industrial Standards (JIS) R3103-3.

Bringing of the SO₂ gas or the SO₃ gas into contact with the surface of the glass plate is carried out, for example, by a method of spraying the SO₂ gas or the SO₃ gas over the surface of the glass plate.

The amount of the SO₂ gas or the SO₃ gas to be sprayed over the surface of the glass plate is properly adjusted so that the distribution of the Na amount in the vicinity of the surface of the glass plate satisfies the above-described condition (I) (preferably the condition (II)).

In a case where the glass plate of the present invention is produced by the float process, it is preferred to bring the SO₂ gas or the SO₃ gas into contact with the surface of the glass plate as follows. That is, the prepared glass material is charged into a melting furnace, the molten glass is properly refined and then formed into plate glass in a float bath. The formed plate glass is annealed in an annealing step, and cut into predetermined dimensions to be used as a glass plate. In this annealing step, the formed plate glass is gradually cooled from about 600°C, and accordingly the SO₂ gas or the SO₃ gas can be sprayed over the plate glass at an annealing stage from a gas spraying apparatus disposed in an annealing zone at the above-described temperature suitable for the contact of the SO₂ gas or the SO₃ gas, i.e. at a temperature of from the glass transition temperature of the glass plate +50°C to the glass transition temperature of the glass plate -150°C. Then, Na₂SO₄ formed on the plate glass surface is removed by washing and the plate glass is properly cut to suitably obtain the glass plate of the present invention.

Further, as the process for producing the glass plate of the present invention in which the Na amount in the vicinity of the surface is decreased, such a glass plate can be obtained, in addition to by bringing the SO₂ gas or the SO₃ gas into contact with the surface of the glass plate, by spraying a halogen gas such as a fluorine gas over the surface of the glass plate, or by bringing the glass plate into contact with hot water or by immersing the glass plate in hot water. In a case where a glass plate is obtained by producing plate glass by forming molten glass by the float process or a down draw method, the SO₂ gas or the SO₃ gas can be sprayed in an annealing step after the step of forming the plate glass. In such a case, it is preferred to use the SO₂ gas or the SO₃ gas with a view to reducing the influence of the gas floating in the atmosphere over the forming step.

With respect to the above-described glass plate of the present invention, since the distribution of the Na mount in the vicinity of the surface of the glass plate satisfies the above condition (I), elution of Na⁺ on the surface with time can be suppressed.

Further, since inexpensive glass comprising soda lime silica glass containing at least elements of Si, Al, Ca and Na, in which the Na amount is reduced only at a portion in the vicinity of the surface, is used, such a glass plate is available at a low cost as compared with alkali-free glass.

Further, since the Na amount in the vicinity of the surface of the glass plate is reduced and thus the amount of SiO₂ in the vicinity of the surface of the glass plate is increased, the refractive index in the vicinity of the surface of the glass plate is decreased. As a result, the reflectance of the glass plate is decreased, and further, the transmittance is increased.

According to the above-described process for producing a glass plate of the present invention, a glass plate wherein the distribution of the Na amount in the vicinity of the surface satisfies the above-described condition (I) is obtained by bringing a SO₂ gas or a SO₃ gas into contact with the surface of the glass plate having a surface temperature of from the glass transition temperature of the glass plate +50°C to the glass transition temperature of the glass plate -150°C, and accordingly a glass plate on the surface of which elution of Na⁺ is suppressed, can be produced at a low cost.

### EXAMPLES

Now, the present invention will be described in detail with reference to Examples. However, it should be understood that the present invention is by no means restricted to such specific Examples.

Examples 1 to 8 are Examples of the present invention, and Example 9 is a Comparative Example. Further, among these Examples, Examples 4 to 9 are Experimental Examples and Examples 1 to 3 are Examples by simulation.

### (Preparation of glass plates in Examples 4 to 8 which are Experimental Examples)

Glass plates in Examples 4 to 8 which are Experimental Examples were prepared as follows. First, the respective materials were mixed so that the composition of a glass plate to be finally obtained would be as illustrated in Table 1, taking the influence of dealkalization by the SO₂ gas into consideration, to prepare a glass material.

The glass material was put in a crucible and heated in an electric furnace at 1,500°C to form molten glass.

The molten glass was cast on a carbon plate and annealed at a predetermined temperature. After cooling, the both surfaces of glass were polished to obtain a glass plate having a thickness of 2 mm. The glass plate was pre-heated at 500°C, and while it was kept in an electric furnace heated to from 600°C to 610°C, a SO₂ gas was sprayed over the surface of the glass plate at a flow rate of 25 ml/min using as a carrier gas an O₂ gas (a N₂ gas or a mixed gas of an O₂ gas and a N₂ gas may also be used, but the O₂ gas was used in the present Examples) at a rate of 175 ml/min. Then, the gas in the electric furnace was replaced with the carrier gas, and the glass plate was taken out from the electric furnace.

### (Preparation of glass plate in Example 9 which is a Comparative Example)

A glass plate in Example 9 was prepared in the same manner as in preparation of the glass plates in Examples 4 and 7 except that no SO₂ gas was sprayed.

With respect to the glass plates thus obtained, the distribution of the Na amount in the vicinity of the surface of the glass plate was measured, and the after-mentioned dS value which is an index of the Na removal amount in the vicinity of the surface of the glass plate and the separation resistance of an antireflection film formed on the surface of the glass plate were evaluated, and the results are shown in Table 1. The measurement and evaluation of the respective values were carried out as follows.

### (Distribution of Na amount in the vicinity of surface of glass plate: Examples 4, 7 and 9)

The Na amount at a specific depth from the surface of the glass plate was measured by X-ray photoelectron spectroscopy as follows.

The Na amount was obtained by measuring the concentration profile (concentration distribution) of Na in the glass by X-ray photoelectron spectroscopy. To measure the Na amount at a specific depth from the surface of the glass plate, the surface of the glass plate was etched by means of ⁶⁰Co ion sputtering. Specifically, the conditions of ⁶⁰Co ion sputtering were 10 kV, 10 nA and an angle of incidence of 67°, the measurement conditions by X-ray photoelectron spectroscopy were such that a monochromatized Al-Kα X-ray source was used at a detection angle of 75°, and the concentration profile was measured in a depth direction to a depth of about 100 nm from the glass plate surface while monitoring Na2s, Ca2s, Mg2s, Al2p, Si2p and 01 s as detection peaks. Since there is no significant difference between the Na amount at a depth of 2,000 nm from the glass plate surface and the Na amount at a depth of 2,000 nm or more, the Na amount at this depth of 2,000 nm was replaced by a value measured by X-ray photoelectron spectroscopy with respect to a general portion in cross section of a piece of the glass plate.

### (Evaluation of adhesion of antireflection film and weather resistance: Examples 4 to 9)

The adhesion (separation resistance) of an antireflection film formed on the surface of the glass plate with time and the weather resistance were evaluated as follows.

The above adhesion and weather resistance are sometimes influenced by the presence or absence of white turbidity called stain. Therefore, the glass plate was subjected to an accelerated test at 120°C under 100%RH for 20 hours to visually evaluate presence or absence of the stain. That is, evaluation was made based on standards Ⓞ: one having outer appearance equal to that of glass (reference glass) which was not subjected to the accelerated test, ○: one having outer appearance substantially equal to that of the reference glass, and ×: one having outer appearance different from that of the reference glass and having remarkable stain.

### (Measurement of dS value which is an index of the Na removal amount in the vicinity of surface of glass plate: Examples 4 to 9)

Further, when a SiO₂ gas or a SO₃ gas is brought into contact with the glass surface, Na₂SO₄ is formed on the glass surface. Therefore, the amount of S atoms (sulfur atoms) contained in the formed Na₂SO₄ was measured by fluorescent X-ray analysis. It was confirmed by ICP (inductively coupled plasma) emission spectrometry and the atomic absorption method that the measured value (dS, unit: number of atoms) of the S atoms and the Na amount released from the glass surface are in a positive correlation such that the Na amount released is increased when the dS value is increased. That is, it was confirmed that the Na amount present in the glass after the SO₂ gas or the SO₃ gas is brought into contact with the glass surface and the dS value are in a negative correlation. Thus, dS by the fluorescent X-ray analysis results in Examples and dS by calculation in Simulation Examples were respectively obtained.

dS was determined in accordance with the following calculation method.

dS=[measured value of S atoms by fluorescent X-ray analysis on the surface of sample after SO₂ treatment]-[measured value of S atoms by fluorescent X-ray analysis on the surface of sample before SO₂ treatment]

### (Glass transition temperature of glass plate)

With respect to the glass transition temperature of a glass plate, the glass transition temperatures in cases of having the respective glass compositions were determined by calculation.

**TABLE 1**

| | | Ex.1 | Ex.2 | Ex.3 | Ex.4 | Ex.5 | Ex.6 | Ex.7 | Ex.8 | Ex.9 |
|---|---|---|---|---|---|---|---|---|---|---|
| Composition (wt%) | SiO₂ | 68.98 | 67.08 | 67.07 | 67.94 | 74.39 | 72.75 | 70.84 | 70.67 | 72.18 |
| | Al₂O₃ | 8.35 | 6.74 | 6.74 | 8.23 | 5.05 | 3.38 | 5.01 | 3.48 | 1.79 |
| | TiO₂ | 0.00 | 0.00 | 0.00 | 0.00 | 0.00 | 0.00 | 0.00 | 0.03 | 0.03 |
| | MgO | 4.5 | 4.45 | 4 | 0.65 | 2 | 0.67 | 0.66 | 3.85 | 3.88 |
| | CaO | 8 | 7.9 | 8.35 | 8.15 | 8.33 | 13.95 | 8.26 | 8.55 | 8.61 |
| | Na₂O | 10.16 | 13.83 | 13.84 | 15.02 | 10.23 | 9.25 | 15.22 | 12.98 | 13.07 |
| | K₂O | 0.00 | 0.00 | 0.00 | 0.00 | 0.00 | 0.00 | 0.00 | 0.44 | 0.44 |
| dS | | 74.33 | 60.88 | 60.44 | 61.92 | 52.67 | 51.02 | 41.83 | 46.08 | 38.42 |
| Tg(°C) | | 610 | 576 | 576 | 577 | 602 | 602 | 564 | 573 | 566 |
| Na amount (%) | Depth: 20 nm | - | - | - | 40 | - | - | 20 | - | 40 |
| | Depth: 40 nm | - | - | - | 40 | - | - | 35 | - | 88 |
| | Depth: 60 nm | - | - | - | 40 | - | - | 57 | - | 95 |
| | Depth: 2000 nm | - | - | - | 100 | - | - | 100 | - | 100 |
| Adhesion/weather resistance | | - | - | - | Ⓞ | ○ | ○ | ○ | ○ | × |

With respect to the glass plates of the present invention in Examples 4, 7 and 8, the distribution of the Na amount in the vicinity of the surface of the glass plate satisfies the above-described condition (I), and accordingly elution of Na⁺ on the surface is suppressed and as a result, an antireflection film formed on the surface is hardly separated, and also excellent weather resistance is obtained.

The glass plate in Example 9 has a composition of conventional soda lime silica glass, Na⁺ is hardly eluted on the surface when the glass plate is brought into contact with a SO₂ gas, and dealkalization was not efficiently carried out, and accordingly distribution of the Na amount in the vicinity of the surface of the glass plate did not satisfy the above-described condition (I) and as a result, an antireflection film formed on the surface was likely to be separated, and the glass plate was poor in the weather resistance.

It is considered that in Examples 1 to 3, the dS value is higher than that of Example 9 and is close to that in Example 4, and accordingly distribution of the Na amount in the vicinity of the surface of the glass plate satisfies the condition (I).

Further, it is considered that in Examples 5 and 6, the dS value is between those of Examples 4 and 7, and the result of the adhesion/weather resistance test is ○, and accordingly distribution of the Na amount in the vicinity of the surface of the glass plate satisfies the condition (I).

### INDUSTRIAL APPLICABILITY

The glass plate of the present invention is suitable as a building glass plate, a glass plate for a vehicle (e.g. window glass for an automobile), a glass plate for a solar cell (a cover glass, a glass substrate for a thin-film solar cell), a glass substrate for a solar power generation light-collecting mirror, etc.

The entire disclosure of Japanese Patent Application No. 2009-276315 filed on December 4, 2009 including specification, claims and summary is incorporated herein by reference in its entirety.

## Claims

1. A glass plate comprising soda lime silica glass containing at least elements of Si, Al, Ca and Na, wherein when the Na amount at a depth of 2,000 nm from at least one surface of the glass plate is 100%, the Na amount at a depth of 20 nm from the above surface is at most 45%, the Na amount at a depth of 40 nm from the above surface is at most 70%, and the Na amount at a depth of 60 nm from the above surface is at most 80%.

2. The glass plate according to Claim 1, which comprises, as represented by mass percentage based on oxides:
SiO₂ : 60 to 80%,
Al₂O₃ : 2 to 10%,
MgO : 0 to 10%,
CaO : 1 to 18%,
Na₂O : 5 to 20%, and
K₂O : 0 to 5%.

3. The glass plate according to Claim 1, which comprises, as represented by mass percentage based on oxides:
SiO₂ : 66 to 72%,
Al₂O₃ : 5 to 10%,
MgO : 4 to 8%,
CaO : 6 to 15%,
Na₂O : 7 to 17%, and
K₂O : 0 to 1%.

4. A process for producing a glass plate comprising soda lime silica glass containing at least elements of Si, Al, Ca and Na, which comprises forming molten glass into a glass plate, and when the glass plate is cooled, bringing a SO₂ gas or a SO₃ gas on at least one surface of the glass plate having a surface temperature of from the glass transition temperature of the glass plate +50°C to the glass transition temperature of the glass plate -150°C, to obtain a glass plate wherein when the Na amount at a depth of 2,000 nm from the above surface after cooling is 100%, the Na amount at a depth of 20 nm from the above surface is at most 45%, the Na amount at a depth of 40 nm from the above surface is at most 70%, and the Na amount at a depth of 60 nm from the above surface is at most 80%.
